# EUROPEAN PATENT SPECIFICATION

(11) **EP 1 818 570 B1**
(45) Date of publication and mention of the grant of the patent: **14.04.2010**
(21) Application number: 06425084.8
(22) Date of filing: 14.02.2006
(51) Int. Cl.: F16H 57/02

(54) **Arrangement of an idler gear in a gear transmission**
Anordnung eines Mitlaufzahnrads in einem Zahnradgetriebe
Arrangement d'un pignon fou dans une transmission par engrenages

(43) Date of publication of application: 15.08.2007
(73) Proprietor: C.R.F. Società Consortile per Azioni, 10043 Orbassano (Torino) (IT)
(72) Inventor: Pregnolato, Gian Luigi, 1-10043 Orbassano (Torino) (IT); Caenazzo, Dario, 1-10043 Orbassano (Torino) (IT); Baret, Carlo Emilio, 1-10043 Orbassano (Torino) (IT); Piazza, Andrea, 1-10043 Orbassano (Torino) (IT)
(74) Representative: Rondano, Davide

(56) References cited:
- DE-A1- 3 111 178
- FR-A- 2 772 450
- GB-A- 452 133
- GB-A- 1 232 064
- US-A- 4 008 629
- US-A- 4 154 126
- PATENT ABSTRACTS OF JAPAN vol. 015, no. 346 (M-1153), 3 September 1991 (1991-09-03) -& JP 03 135833 A (KUBOTA CORP), 10 June 1991 (1991-06-10)

## Description

The present invention relates in general to a gear transmission and more specifically to the arrangement of an idler gear in the end area of a shaft of said transmission, such as a mechanical gearbox for a motor vehicle.

The following description of the prior art and of the invention will be given with reference to a mechanical gearbox for a motor vehicle. However, it should be understood that the invention is applicable to any gear transmission in which at least one idler gear is provided and is arranged in the end area of a shaft, coaxially with this shaft. For example, the invention can also be applied to a reduction gear unit.

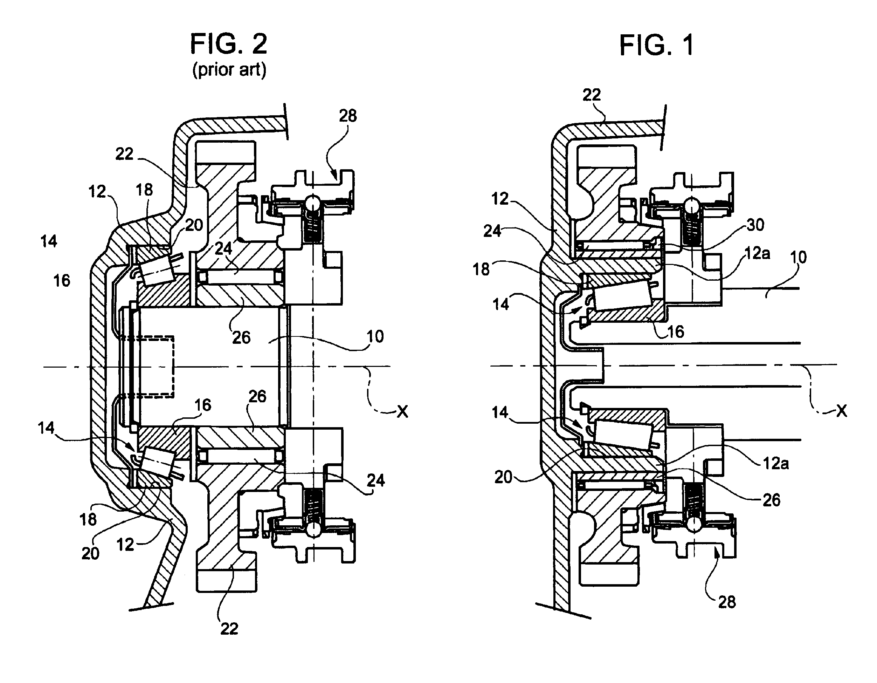

Figure 2 of the attached drawings shows a typical mode of assembly of an idler gear on an end portion of a shaft of a mechanical gearbox, according to the prior art. With reference to Figure 2, a shaft 10 of a gearbox (not shown in full as it is of a generally known type) is supported at one of its ends by a casing 12 of the gearbox, typically formed by casting, by means of a support 14, which in the illustrated example is an oblique roller bearing, but which could clearly be another type of bearing, for example a deep groove ball bearing, capable of supporting both radial and axial loads. The bearing 14 has an inner ring 16 mounted on the end of the shaft 10 and an outer ring 18 mounted in a suitable cylindrical seat 20 provided in the gearbox casing 12. Proceeding along the axis X of the shaft 10 from the end towards the centre, next to the bearing 14 there is positioned an idler gear 22, which is supported by means of a roller bearing 24 on a ring 26 keyed on to the shaft 10. The ring 26 is fast for rotation with the shaft 10, while the gear 22 can rotate freely, because of the bearing 24, with respect to the ring 26 and therefore with respect to the shaft 10. Next to the idler gear 22 there is positioned a coupling device 28, which in the illustrated example is of the type having a synchronizing ring and which can be operated to couple the gear 22 for rotation with the shaft 10.

The arrangement of the support 14 and of the idler gear 22 on the end portion of the shaft 10 of a mechanical gearbox according to the prior art described above is disadvantageous in terms of the overall axial dimension of the gearbox, since these two components are positioned adjacent to each other on the shaft and therefore their combined overall axial dimension is the sum of the overall axial dimensions of the single components. This clearly represents an impediment to meeting the requirement, which is increasingly urgent at present in the automotive industry, to reduce the overall dimension, particularly the overall axial dimension, of the gearbox.

A gear transmission according to the preamble of Claim 1 is known from JP 03 135833. The gear transmission disclosed in the above-mentioned prior art document comprises a shaft supported rotatably at one of its ends on a casing by means of a first bearing fitted in a first annular portion formed by the casing, and an idler gear arranged coaxially with the shaft and rotatable with respect to the shaft about the axis of this latter. The idler gear is supported both by a second bearing fitted in a second annular portion formed by the casing and by a cylindrical bush fitted in third annular portion formed by the casing. The first and second bearings are partially interpenetrating or overlapping in the axial direction.

The object of the invention is therefore to provide an arrangement of a gear and of a support at the end of a shaft of a gear transmission, particularly a shaft of a mechanical gearbox of a motor vehicle, which enables the combined overall axial dimension of the transmission to be reduced with respect to the prior art.

This object is fully achieved according to the invention by means of a gear transmission having the characteristics defined in the characterizing part of independent Claim 1.

Since the end support of the shaft and the support of the idler gear arranged at the end of the shaft are at least partially interpenetrating or overlapping axially, a reduction is achieved in the overall axial dimension with respect to the conventional solution in which the gear and the bearing are arranged adjacent to each other, this reduction being substantially equal to the extent of the axial overlap of the two supports.

Since the support of the idler gear is mounted on the outer surface of an annular support portion formed by the transmission casing and extending axially towards the interior of the transmission, while the end support of the shaft is mounted in the cylindrical seat defined by the inner surface of the annular support portion, the two supports overlap over the whole of their axial width and therefore a reduction is achieved in the overall axial dimension with respect to the convention solution in which the gear and the bearing are arranged adjacent to each other, this reduction being substantially equal to the axial width of these supports.

Advantageously, the idler gear is mounted on the annular support portion of the gearbox casing by means of a needle.

Further advantageous characteristics of the invention are specified in the dependent claims.

Preferably, the idler gear is retained axially on the corresponding support portion of the transmission casing by means of a retaining ring, which facilitates the assembly of the transmission, since it ensures the retention of the idler gear on the casing.

The idler gear can equally well be a straight gear or a helical gear. Similarly, the idler gear can equally well be intended to transmit torque, by means of a coupling device, to the shaft with which it is coaxial, or to operate as an intermediate gear, in other words as a gear intended to transmit torque between two further shafts parallel to the shaft with which it is coaxial.

The characteristics and advantages of the invention will be made clear by the following detailed description, provided purely by way of non-limiting example, with reference to the attached drawings, in which:
Figure 1 is a view in axial section showing an end portion of a shaft of a motor vehicle gearbox according to a preferred embodiment of the present invention;
Figure 2 is a view in axial section showing an end portion of a shaft of a motor vehicle gearbox according to the prior art; and
Figure 3 is a view in axial section which compares the overall axial dimensions of a gearbox according to the invention, as shown in Figure 1, and of a gearbox according to the prior art, as shown in Figure 2.

In the following description and claims, the term "axial" is used to indicate a direction coinciding with or parallel to the axis of rotation of the transmission shaft.

With reference to Figure 1, in which parts and elements identical or corresponding to those of Figure 2 (prior art) have been given the same reference numerals, a shaft 10 of a mechanical gearbox for a motor vehicle is supported at each end by a casing 12, typically formed by casting. Figure 1 shows, in particular, only the left-hand end portion of the shaft 10, but it is clear that everything described and illustrated in the present application is to be considered applicable to the other end portion of the shaft. Furthermore, the present invention is clearly applicable both to a primary shaft, or input shaft, of the gearbox, and to a secondary shaft, or output shaft.

More particularly, the shaft 10 is supported by the casing 12 by means of a support 14, which preferably consists of an oblique roller bearing (as in the illustrated example), but which can clearly be any other suitable type of bearing, for example a deep groove ball bearing, capable of supporting both radial and axial loads. The bearing 14 has an inner ring 16 mounted on the end of the shaft 10 and an outer ring 18 mounted in a suitable cylindrical seat 20 defined by the inner surface of an annular support portion 12a which extends towards the interior of the casing 12 and which is advantageously formed in one piece with the latter. No further details of the mounting of the inner ring 16 on the shaft 10 and of the outer ring 18 in the cylindrical seat 20 will be provided here, since the normal knowledge of those skilled in the art is applicable.

An idler gear 22 is supported on the annular support portion 12a of the casing 12, coaxially with the shaft 10, in such a way that it can rotate about the axis of rotation of this shaft. In the illustrated embodiment, the idler gear 22 can be coupled for rotation with the shaft 10 by means of a coupling device 28, arranged immediately adjacent to the bearing 14. The coupling device 28 of Figure 1 is of the type with a synchronizing ring, but can clearly be of any other type. Clearly, if the idler gear 22 is an intermediate gear, the coupling device 28 is unnecessary.

The idler gear 22 is supported by means of a needle bearing 24 interposed between the gear 22 and a ring 26 interference-fitted on the outer cylindrical surface of the annular support portion 12a.

Advantageously, the idler gear 22 is retained axially on the annular support portion 12a of the casing 12 by means of a retaining ring 30. Because of the retaining ring 30, the gear 22 can be stably mounted in advance on the casing 12, which facilitates the assembly of the gearbox.

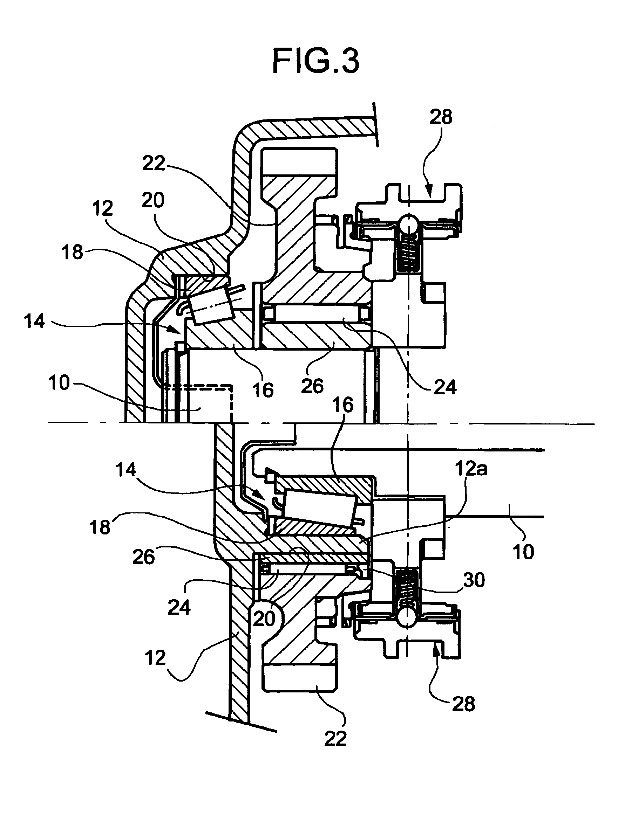

Contrary to the prior art discussed above, in which the bearing supporting the shaft and the bearing supporting the idler gear are arranged axially adjacent to each other, in such a way that their combined overall axial dimension is the sum of the overall axial dimensions of the single bearings, according to the invention the two bearings are arranged so that they at least partially overlap or interpenetrate each other. Preferably, the two coaxial bearings are completely interpenetrating or overlapping axially, in such a way that their combined overall axial dimension is substantially equal to the overall dimension of only one of the bearings. In other words, the arrangement of the two bearings "in series" according to the prior art is replaced according to the invention by an arrangement "in parallel". As clearly shown in Figure 3, which compares the overall axial dimensions resulting from the arrangement according to the prior art with those resulting from the arrangement according to the invention, the arrangement according to the invention makes it possible to achieve a significant reduction of the overall axial dimension of the gearbox with respect to the prior art, this reduction being substantially equal to the overall axial dimension of the needle bearing which supports the idler gear.

Naturally, the principle of the invention remaining unchanged, the embodiments and the details of construction can vary widely from those described and illustrated purely by way of non-limiting example.

For example, the idler gear can be mounted on the annular support portion of the casing by means of a bush, instead of a needle bearing.

The annular support portion can be formed by an element distinct from the casing and fixed to the latter, instead of being formed integrally with the casing.

The idler gear can equally well be a straight gear or helical gear, and can equally well be intended to transmit torque, by means of the coupling device, to the associated shaft, or to act as an intermediate gear intended to transmit torque between two further shafts parallel to the associated shaft.

Additionally, in the case of a mechanical gearbox, the idler gear can be associated with any speed of the gearbox, provided that it is arranged at the end of the corresponding shaft of the gearbox.

## Claims

1. Gear transmission comprising a casing (12), a shaft (10) supported rotatably at one of its ends on the casing (12) by means of a first support (14), and an idler gear (22) arranged coaxially with the said end of the shaft (10) and supported by means of a second support (24) in such a way that it can rotate with respect to the shaft (10) about the axis of the latter, wherein the said first and second supports (14, 24) are at least partially interpenetrating or overlapping axially, wherein the casing (12) forms an annular support portion (12a) extending towards the interior of the transmission and wherein the said first support (14) is mounted in a cylindrical seat (20) defined by the inner surface of the annular support portion (12a),
**characterized in that** said second support (24) is a needle bearing mounted on the outer cylindrical surface of the annular support portion (12a) so as to be radially interposed between the gear (22) and said surface.

2. Gear transmission according to Claim 1, wherein the said first support (14) is a rolling bearing having an inner ring (16) mounted on an end portion of the shaft (10) and an outer ring (18) mounted in the cylindrical seat (20).

3. Gear transmission according to Claim 2, wherein the said first support (14) is a conical roller bearing.

4. Gear transmission according to any one of Claims 1 to 3, wherein the annular support portion (12a) is formed integrally with the casing (12).

5. Gear transmission according to any one of Claims 1 to 3, wherein the annular support portion (12a) is formed by an element distinct from the casing (12) and fixed to the latter.

6. Gear transmission according to any one of the preceding claims, further comprising retaining means (30) for axially retaining the gear (22) on the casing (12).

7. Gear transmission according to Claim 6, wherein the said retaining means (30) include a retaining ring mounted on the annular support portion (12a).

8. Gear transmission according to any one of the preceding claims, further comprising a coupling device (28) for coupling the idler gear (22) for rotation with the shaft (10), wherein the coupling device (28) is mounted on the shaft (10) immediately adjacent to the said first support (14).

## Patentansprüche

1. Getriebeübersetzung, enthaltend ein Gehäuse (12), eine Welle (10), die drehbar an einem ihrer Enden an dem Gehäuse (12) mit Hilfe einer ersten Halterung (14) gelagert ist, und ein Mitlaufzahnrad (22), das koaxial mit dem Ende der Welle (10) angeordnet ist und mit Hilfe einer zweiten Halterung (24) derart gelagert ist, dass es sich im Bezug auf die Welle (10) um die Achse der letztgenannten drehen kann, wobei die erste und die zweite Halterung (14, 24) weinigstens teilweise einander durchdringen oder axial überlappen, das Gehäuse (12) einen ringförmigen Halteabschnitt (12a) ausbildet, der sich zum Inneren des Getriebes erstreckt, und die erste Halterung (14) in einem zylindrischen Sitz (20) angebracht ist, der durch die Innenfläche des ringförmigen Halteabschnittes (12a) definiert ist
**dadurch gekennzeichnet, dass** die zweite Halterung (24) ein Nadellager ist, das an der zylindrischen Außenoberfläche des ringförmigen Halteabschnittes (12a) derart angebracht ist, das es radial zwischen dem Zahnrad (22) und der Oberfläche angeordnet ist.

2. Getriebeübersetzung nach Anspruch 1, bei der die erste Halterung (14) ein Rollenlager ist, das einen Innenring (16), der an einem Endabschnitt der Welle (10) angebracht ist, und einen Außenring (18) hat, der im zylindrischen Sitz (20) angebracht ist.

3. Getriebeübersetzung nach Anspruch 2, bei der die erste Halterung (14) ein konisches Rollenlager ist.

4. Getriebeübersetzung nach einem der Ansprüche 1 bis 3, bei der der ringförmige Halteabschnitt (12a) integral mit dem Gehäuse (12) ausgebildet ist.

5. Getriebeübersetzung nach einem der Ansprüche 1 bis 3, bei der der ringförmige Halteabschnitt (12a) durch ein Element getrennt von dem Gehäuse (12) ausgebildet und an letztgenanntem befestigt ist.

6. Getriebeübersetzung nach einem der vorhergehenden Ansprüche, weiterhin enthaltend eine Rückhalteeinrichtung (30), um das Zahnrad (22) axial am Gehäuse (12) zu halten.

7. Getriebeübersetzung nach Anspruch 6, bei der die Rückhalteeinrichtung (30) einen Rückhaltering enthält, der am ringförmigen Halteabschnitt (12a) angebracht ist.

8. Getriebeübersetzung nach einem der vorhergehenden Ansprüche, weiterhin enthaltend eine Kopplungsvorrichtung (28) zum Koppeln des Mitlaufzahnrades (22) für eine Drehung mit der Welle (10), wobei die Kopplungsvorrichtung (28) an der Welle (10) unmittelbar benachbart der ersten Halterung (14) angebracht ist.

## Revendications

1. Transmission par engrenages comprenant un carter (12), un arbre (10) supporté en rotation au niveau de l'une de ses extrémités sur le carter (12) au moyen d'un premier support (14), et un engrenage intermédiaire (22) agencé de manière coaxiale avec ladite extrémité de l'arbre (10) et supporté au moyen d'un second support (24) de sorte qu'il peut tourner par rapport à l'arbre (10) autour de l'axe de ce dernier, dans laquelle lesdits premier et second supports (14, 24) s'interpénètrent ou se chevauchent au moins partiellement de manière axiale, dans laquelle le carter (12) forme une partie de support annulaire (12a) s'étendant vers l'intérieur de la transmission et dans laquelle ledit premier support (14) est monté dans un siège cylindrique (20) défini par la surface interne de la partie de support annulaire (12a),
**caractérisée en ce que** ledit second support (24) est un roulement à aiguilles monté sur la surface cylindrique externe de la partie de support annulaire (12a) afin d'être intercalé de manière radiale entre l'engrenage (22) et ladite surface.

2. Transmission à engrenages selon la revendication 1, dans laquelle ledit premier support (14) est un palier à roulement ayant une bague interne (16) montée sur une partie d'extrémité de l'arbre (10) et une bague externe (18) montée dans le siège cylindrique (20).

3. Transmission à engrenages selon la revendication 2, dans laquelle ledit premier support (14) est un palier à roulement conique.

4. Transmission à engrenages selon l'une quelconque des revendications 1 à 3, dans laquelle la partie de support annulaire (12a) est formée de manière solidaire avec le carter (12).

5. Transmission à engrenages selon l'une quelconque des revendications 1 à 3, dans laquelle la partie de support annulaire (12a) est formée par un élément distinct du carter (12) et fixée sur ce dernier.

6. Transmission à engrenages selon l'une quelconque des revendications précédentes, comprenant en outre des moyens de retenue (30) pour retenir de manière axiale l'engrenage (22) sur le carter (12).

7. Transmission à engrenages selon la revendication 6, dans laquelle lesdits moyens de retenue (30) comprennent une bague de retenue montée sur la partie de support annulaire (12a).

8. Transmission à engrenages selon l'une quelconque des revendications précédentes, comprenant en outre un dispositif de couplage (28) pour coupler l'engrenage intermédiaire (22) pour la rotation avec l'arbre (10), dans laquelle le dispositif de couplage (28) est monté sur l'arbre (10) immédiatement adjacent audit premier support (14).
